# EUROPEAN PATENT APPLICATION

(11) **EP 1 503 269 A1**
(43) Date of publication of application: **02.02.2005**
(21) Application number: 03291903.7
(22) Date of filing: 31.07.2003
(51) Int. Cl.: G06F 1/32

(54) **Controller apparatus for a communication bus**

(71) Applicant: Freescale Semiconductor, Inc., Austin, Texas 78735 (US)
(72) Inventor: Huber, Yves, 78460 Chevreuse (FR); Bogavac, Davor, 42834 Kallered (SE); Mounier, Philippe, 31170 Tournefeuille (FR)
(74) Representative: Wharmby, Martin Angus

(57) **Abstract**

A controller node (3 - 6) for communication with remote nodes (11 - 25) over a communication bus (1), especially a CAN bus. The controller node comprises a data processing unit (30) for generating signals to be transmitted and for processing signals received over the communication bus (1), and a management unit (31) responsive to event signals from the remote nodes (11 - 25) and/or from the data processing unit (30) for generating control signals controlling the operating state of the data processing unit (30).

The management unit (31) includes a crystal or resonator frequency reference (37), and an oscillator (36) controlled by the reference frequency for generating a clock signal. A clock switch (38) supplies the clock signal to at least a part of the data processing unit (30) during at least a first operating mode of the data processing unit and interrupts supply of the clock signal during a second operating mode of the data processing unit. A power switch (39) supplies power from a voltage regulator in the management unit to at least the part of the data processing unit (30) during at least the first operating mode of the data processing unit and interrupts the supply of power during another operating mode of the data processing unit.

The data processing unit (30) can operate in the second operating mode with reduced quiescent current but a fast wake-up time.

## Description

### Field of the invention

This invention relates to a controller apparatus for a communication bus.

### Background of the invention

Local networks often make use of a communication bus over which a set of nodes communicates. A driver module in a controller node transmits step-change signals over the bus to receivers in remote controlled nodes. The step-change signal activates the multiplexed remote nodes connected to the bus and the bus also selectively transmits signals from the remote nodes back to a receiver in the controller node.

Such a bus is used in automotive vehicles, for example, the bus comprising either a single line or a differential pair of conductors in which the current flows, the close coupling between the pair of conductors reducing their sensitivity to electromagnetic interference ('EMI'), that is to say reception of noise induced in the wires of the bus, and improving their electromagnetic compatibility ('EMC'), that is to say the radiation of parasitic fields by the currents flowing in the wires of the bus; both are critical parameters, especially in automotive applications.

Historically, in automotive applications, functions such as door locks, seat positions, electric mirrors, and window operations have been controlled directly by electrical direct current delivered by wires and switches. Such functions may today be controlled by ECUs (Electronic Control Units) together with sensors and actuators in a multiplexed Controller Area Network (CAN). The Controller Area Network (CAN) standard (ISO 11898) allows data to be transmitted by switching a signal, at a frequency of 10kbauds to 1Mbaud for example, to the multiplexed receiver modules over the differential pair cable. The receiver modules may be actuators that perform a function, for example by generating mechanical power required, or sensors that respond to activation by making measurements and transmitting the results back to the ECU over the bus.

The CAN bus was designed to be used as a vehicle serial data bus, and satisfies the demands of real-time processing, reliable operation in a vehicle's EMI environment, is cost-effective, and provides a reasonable data bandwidth. However, connecting with the main body network directly via a CAN bus system can be expensive because of increased costs per node and because high overall network traffic can make management extremely difficult. To help reduce costs, the logical extension is to structure the network hierarchically.

A variant on the CAN standard is the LIN (Local Interconnect Network) sub-bus standard (see ISO 7498), to provide connection to local network clusters. A LIN sub-bus system uses a single-wire implementation (enhanced ISO9141), which can significantly reduce manufacturing and component costs. Component costs are further reduced by self-synchronization, without crystal or ceramics resonator, in the controlled node. The system is based on common Universal asynchronous receiver and transmitter serial communications interface (UART/SCI) hardware that is shared by most micro-controllers, for a more flexible, lower-cost silicon implementation.

Other standards for step-change signals over a communication bus are the Flexray and MOST standards.

Reducing power consumption of the nodes of such networks, especially of the controller node, is often critical, especially during waiting periods when the controlled nodes are inactive. This is the case in automotive applications, for example, when a vehicle is parked. The nodes are designed with various degrees of standby, sleep, and stop modes, in which part or all of the operating functions are halted or the power supplies to part of the modules within the nodes are switched off. However, waking the functions up and restoring supplies to the switched off modules to retrieve the normal run condition of the module or node introduces a greater or lesser delay that may be more or less acceptable for a given function. Accordingly, it is desirable not only to reduce waiting period power requirements but also to reduce wake-up times.

Typically, the controller node comprises central processing unit that generates the signals to be transmitted and processes the signals received. The controller node also includes a management unit for selectively supplying power to the controlled nodes and other modules of the controller node and sending signals controlling the operating state of the controlled nodes and the other controller node modules. Typically, the complete vehicle system comprises more than one controller node and sub-networks.

### Summary of the invention

The present invention provides a controller node and communication apparatus as described in the accompanying claims.

### Brief description of the drawings

Figure 1 is a block schematic diagram of a communication bus system in an automotive vehicle,
Figure 2 is a schematic diagram of a controller in the communication bus system of Figure 1 in accordance with one embodiment of the invention, given by way of example, and
Figure 3 is a block schematic diagram of a micro-controller unit and a system base integrated circuit in the controller of Figure 2.

### Detailed description of the preferred embodiments

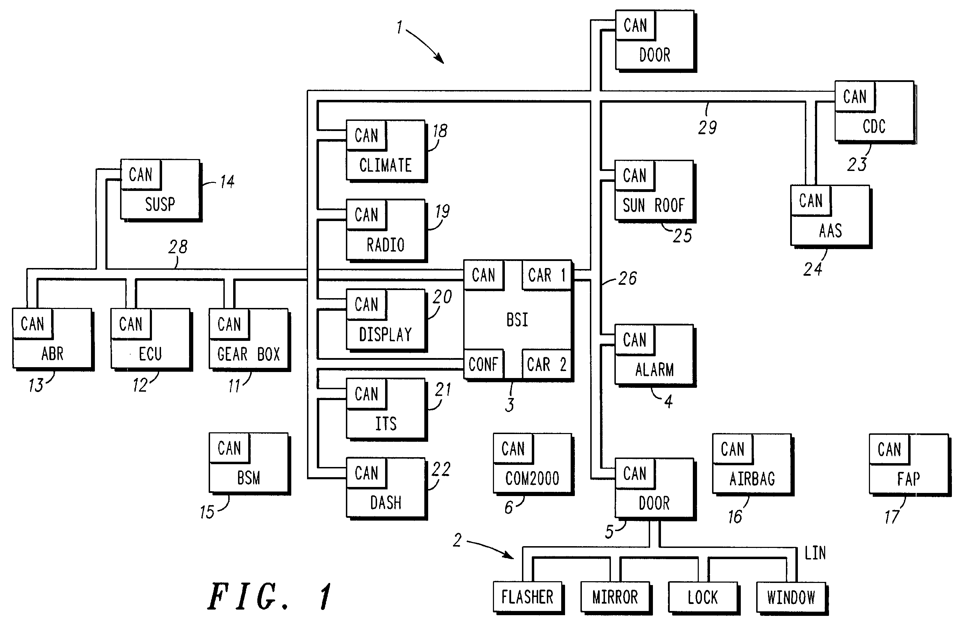

Figure 1 shows a communication bus system for an automotive vehicle communicating over a CAN bus 1 and a LIN bus 2. The CAN bus 1 communicates with a first category of nodes that must remain active with short reaction times even while the vehicle is parked. The first category of nodes includes a central control and gateway node 3, an intrusion alarm node 4, a door node 5, and a communications node 6 for an RF communications unit.

In this example of a vehicle communication bus system, the door node 5 also communicates over the LIN bus 2, with a LIN node 7 controlling external flasher operations, a node 8 controlling rear view mirrors, a door lock node 9 controlling the door locks for a remote key entry system, and a window node 10 controlling motors for window opening and shutting.

The CAN bus 1 also communicates with a second category of nodes that do not need to remain active with short reaction times while the vehicle is parked. The second category of nodes includes a node 11 controlling the gearbox, a node 12 controlling the engine control unit, a node 13 controlling the anti-lock braking system, and a node 14 controlling the suspension control unit. The second category of nodes also includes a node 15 for the front control unit, a node 16 controlling the airbag system, and a node 17 controlling the particle filter. The second category of nodes also includes nodes 18 to 24 controlling respectively the climate control, the radio and hi-fi set, a display unit, an IT system, the dashboard equipment, a CD player, a parking assistance unit, and a sunroof.

It will be appreciated that the above vehicle system is given by way of example only, and the configuration of the CAN bus, with or without the LIN bus, can be adapted to the requirements of any particular vehicle.

In this example, the CAN bus 1 comprises a first line 26 for communications between a first port of the central control node 3 and the nodes 4, 5 and 25; a second line 27 for communications between a second port of the central control unit 3 and the nodes 6, 15, 16 and 17; a third line 28 for communications between a third port of the central control unit 3 and the nodes 11 to 14; and a fourth line 29 for communications between a fourth port of the central communications unit 3 and the nodes 18 to 24.

The requirements for response time of the nodes 3 to 6 of the first category and, in particular, for their wake-up time is of the order of 100 microseconds or less. In addition, since these units must be capable of responding to an input signal even when the car is in the parked mode, they must remain supplied with electrical power and they must be capable of operating in a quiescent mode with a very low current consumption, as low as possible but in any case substantially lower than one milliamp.

The nodes 3 to 6 are accordingly designed to operate in a run mode in which they are fully activated and supplied with power, and in partially shut down modes in which as many parts of each node as possible are shut down. Certain parts of the nodes are woken periodically to check at periodic intervals for input signals: it is also required that the nodes be capable of timing such intervals with precision and, in particular, within 1%, which excludes controlling the timing by free running oscillators using RC circuits, for example.

On the other hand, certain other CAN nodes in the second category, such as the nodes 11 to 14, for example, are only required to operate during the periods when the vehicle is being driven and their power supply can be cut off while the vehicle is parked.

For nodes such as the nodes 3 to 6, whose wake-up times are critical and whose quiescent current consumption is critical, two factors are of particular concern regarding the wake-up times. One factor is the delay before a part of a node that has been shut down becomes fully operational in a stable condition when the power supply is re-established. This is also the case for the oscillators that provide clock signals, so that another factor concerning wake-up times is that if the clock oscillator is shut down there is a substantial delay before the frequency of the clock signal stabilises sufficiently for proper operation of the other parts of the node that it supplies clock signals to. On the other hand, if the clock signal generator is left running in the node during the quiescent state, increased current consumption occurs at the pulse front of each clock signal in the activated parts of the node.

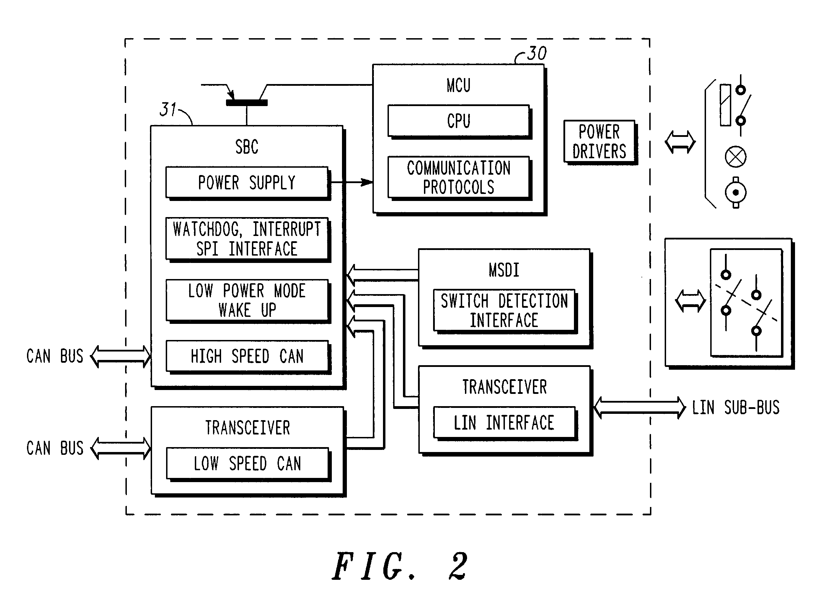

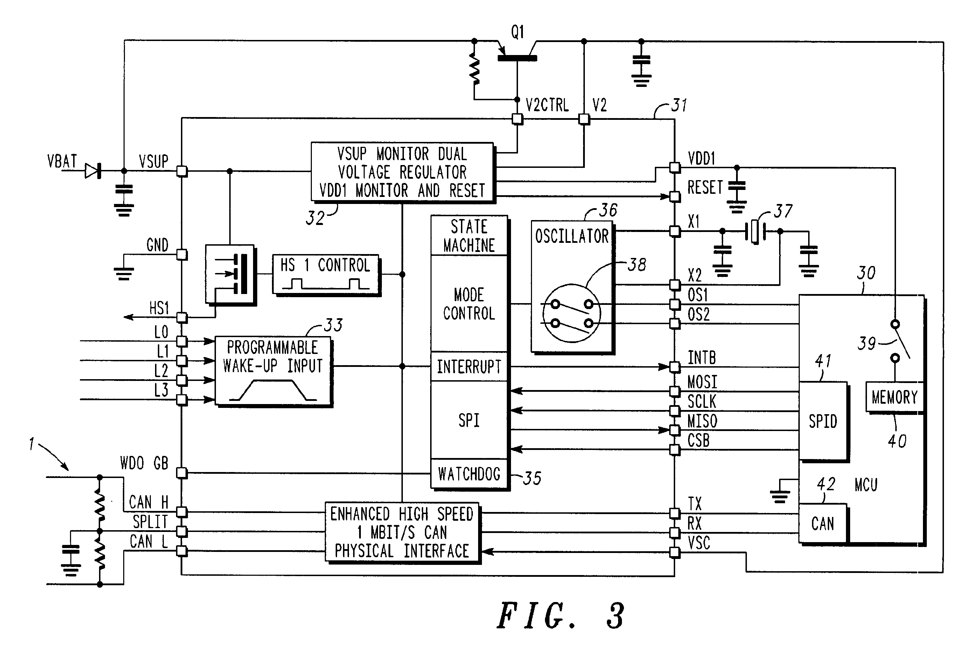

Figure 2 shows in more detail a CAN node suitable for use as one of the first category of nodes 3 to 6, as applied to the node 3 by way of example. The node comprises a data processing unit comprising a micro-controller integrated circuit 30, and a management unit comprising a system base integrated circuit 31. The micro-controller unit ('MCU') 30 comprises, in particular, memory and data processing functions for generating signals to be transmitted, and for processing signals received, over the communication bus 1. The system base integrated circuit 31 is shown in more detail in Figure 3.

The management unit system base integrated circuit 31 comprises a voltage monitor and regulator 32 for supplying regulated voltage to other parts of the system base integrated circuit 31 and to the micro-controller unit 30 of the node. The system base integrated circuit 31 also includes a programmable wake-up interface 33 for receiving wake-up signals over lines L0, L1, L2 and L3. The system base integrated circuit 31 also includes a CAN interface 34, coupled between the CAN bus 1 and the micro-controller unit 30. Further CAN interfaces may be provided between other ports of the micro-controller unit 30 and other lines of the CAN bus.

The system base integrated circuit 31 of the management unit also includes a state machine 35 that is responsive to signals marking events received from remote nodes of the communications system over the CAN bus 1, or from other components over the lines L0 to L3, or from the data processing unit comprising the MCU 30. The state machine 35 generates control signals controlling the operating state of the data processing unit and, in particular, of the MCU 30. In particular, the control signals may include interrupt signals and serial port interface signals.

In a prior art node, an oscillator controlled by a reference frequency component was included in the data processing unit. In this embodiment of the present invention, such an oscillator and reference frequency unit is omitted from the data processing unit. Instead, an oscillator 36 is included in the system base integrated circuit 31 and is controlled by a reference frequency unit in the form of a crystal 37 connected to the integrated circuit 31.

In an alternative embodiment of the invention, the crystal 37 is replaced by a resonator.

In both cases, the oscillator 36 provides a precise clock signal for the node and, in particular, for the MCU 30, as well as the internal components of the system base integrated circuit 31. A clock switch 38 is provided in order to interrupt or re-establish the clock signal supplied to the MCU 30.

In a first embodiment of the invention, the clock switch 38 is included in the system base integrated circuit 31. In a second embodiment of the invention, the clock switch 38 is included in the MCU 30. In both embodiments, the clock switch 38 is controlled by the state machine 35.

The MCU 30 of the data processing unit includes a power switch 39 controlled by the state machine 35 for supplying power from the voltage regulator 32 to parts of the MCU 30 and, in particular, to parts such as a memory 40 that have high current consumption, even in the quiescent state of the MCU 30, but which can be woken sufficiently rapidly when power is re-established by closing the power switch 39. Other parts of the MCU 30, such as the serial port interface 41 and a CAN port 42, which have lower current consumption in the quiescent state and which are required to remain activated even during the quiescent state of the MCU 30 are supplied directly from the voltage regulator 32 without passing through the switch 39.

In operation, the oscillator 36 runs continuously and is used to supply clock signals to the other components of the system base integrated circuit 31, improving the forced wake-up capability and cyclic wake-up performance of the node. The oscillator 36 can thus replace several free running oscillators that would otherwise be required in the system base integrated circuit 31 while offering greater accuracy. The clock signal from the switch 39 can be established instantaneously at an accurate frequency.

Different operating modes of the node are now possible according to the requirements of the application of the node. For a node where a wake-up time of the order of three milliseconds of sufficient, the MCU 30 is shut down by opening the power switch 39 and the system base integrated circuit is run in sleep mode, in which parts of the system base integrated circuit are not supplied with power, but the oscillator 36 and state machine 35 are activated; the clock signal from the oscillator 36 being sufficiently precise to enable periodic wake-up of the system base integrated circuit 31 with an accuracy better than 1%.

In a second mode of operation, suitable where a very short wake-up time of less than 100 microseconds is required, the power supply switch 39 is closed, so as to supply power to all parts of the MCU 30, but the clock switch 38 is opened so that no clock signal is supplied to the MCU 30. Wake-up from this mode is faster, since the delay due to re-establishing the power supply to the MCU 30 is avoided, at the expense of somewhat higher quiescent current consumption.

In a third mode of operation, both the power switch 39 and the clock switch 38 are shut, supplying both power and clock signal to the MCU 30, but its operation is held by the interrupt signal from the state machine 35. This mode enables an even shorter wake-up time of the order of less than 50 microseconds, but at the expense of a substantially higher quiescent current.

In the normal run mode, the power switch 39 and the clock switch 38 are both closed to supply power and the clock signal to the MCU 30 and no interrupt signal is sent by the state machine 35, so that the MCU 30 is fully operational.

The quiescent modes of operation of the node and the typical proportions of applications whose requirements can be satisfied by the nodes running in different operational modes are summarised in the following tables.

Without the present invention:

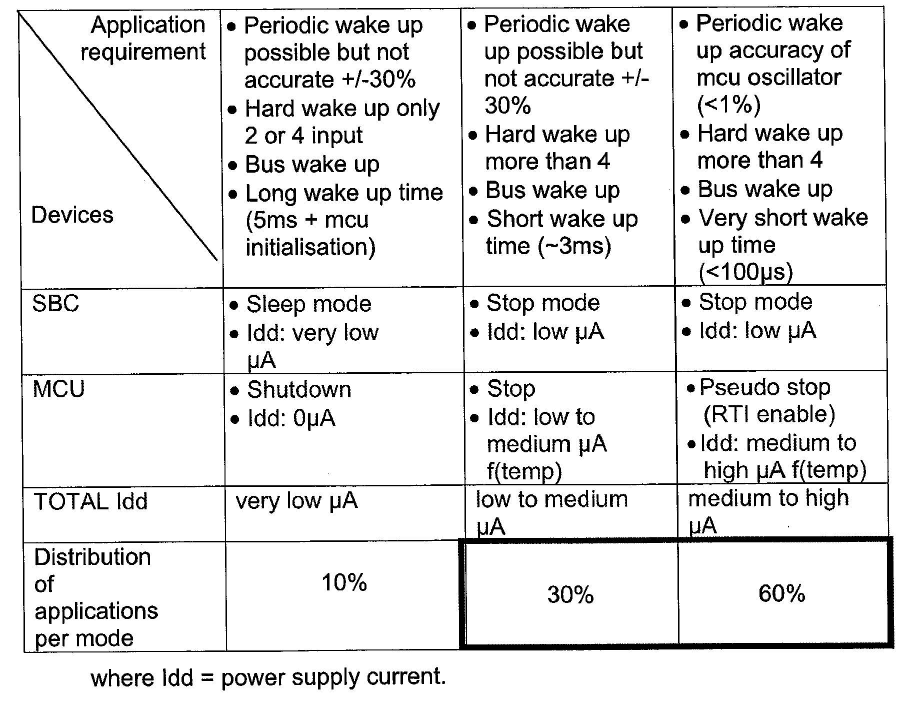

It is apparent that, without the present invention, the controller can satisfy only 10% of applications' requirements for wake-up times at low quiescent current and 90% of applications have to be met with modes where either the wake-up time is as long as 3ms and periodic wake-up is inaccurate or the quiescent current may have high values.

With the present invention

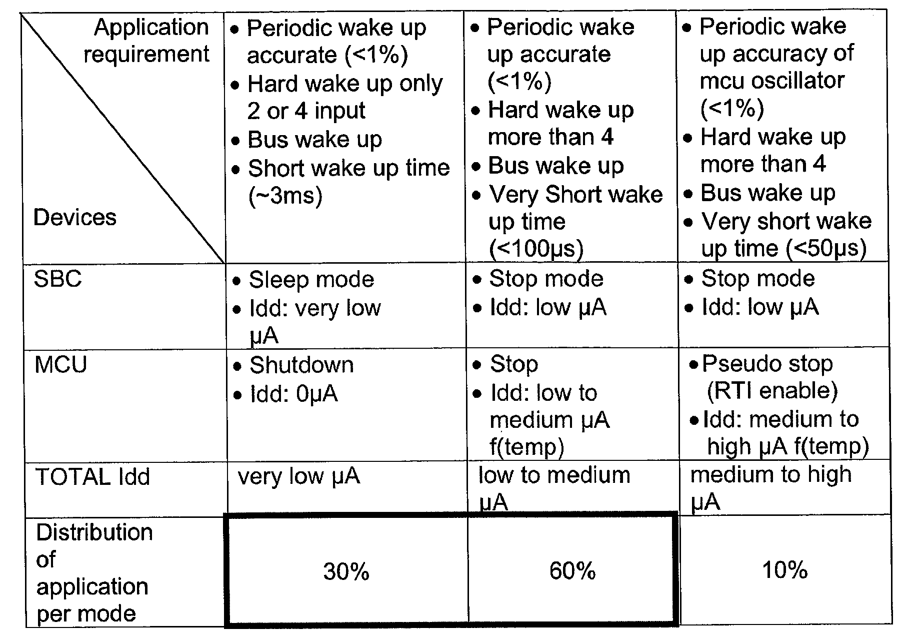

It is apparent that, with the present invention, the controller can satisfy 90% of applications' requirements for short or very short wake-up times and accurate periodic wake-up with quiescent current no higher than medium values and only 10% of applications have to accept modes where the quiescent current may have high values.

Although the invention has been described above with reference particularly to a CAN communication system, it will be appreciated that the invention is applicable to other communication systems with multi-flex messages on a communication bus requiring precise timing and low quiescent currents.

## Claims

1. A controller node (3 - 6) for communication with remote nodes (11 - 25) over a communication bus (1), said controller node comprising a data processing unit (30) for generating signals to be transmitted and for processing signals received over the communication bus (1), and a management unit (31) responsive to event signals from said remote nodes (11 - 25) and/or from said data processing unit (30) for generating control signals controlling the operating state of said data processing unit (30),
**characterised in that** said management unit (31) includes reference frequency means (37), and oscillator means (36) controlled by said reference frequency means for generating a clock signal, and the apparatus includes clock switch means (38) for supplying said clock signal to at least a part of said data processing unit (30) during at least a first operating mode of said data processing unit and for interrupting supply of said clock signal during a second operating mode of said data processing unit, and power switch means (39) for supplying power to at least said part of said data processing unit (30) during at least said first operating mode of said data processing unit and for interrupting the supply of power during another operating mode of said data processing unit.

2. A controller node as claimed in claim 1, wherein said power switch means (39) is arranged to supply power to said part of said data processing unit (30) during said second operating mode of said data processing unit.

3. A controller node as claimed in claim 2, wherein during a third operating mode of said data processing unit said clock switch means (38) is arranged to interrupt supply of said clock signal to a part or to the whole of said data processing unit (30) and said power switch means (39) is arranged to interrupt supply of power to a part of said data processing unit.

4. A controller node as claimed in claim 2 or 3, wherein during a fourth operating mode of said data processing unit said clock switch means (38) is arranged to interrupt supply of said clock signal to said data processing unit (30) and said power switch means (39) is arranged to interrupt supply of power to the whole of said data processing unit.

5. A controller node as claimed in any preceding claim, wherein said oscillator means (36) comprises part of an integrated circuit in said management unit.

6. A controller node as claimed in claim 5, wherein said clock switch means (38) is part of said integrated circuit in said management unit

7. A controller node as claimed in any preceding claim, wherein said power switch means (39) is part of said management unit.

8. A controller node as claimed in any preceding claim, wherein said management unit (31) includes communication bus interface means (34) for sending and receiving communication signals over said communication bus (1 ).

9. A controller node as claimed in any preceding claim, wherein said management unit (31) includes voltage regulator means (32) for supplying power to said power switch means (39).

10. Communication apparatus comprising a controller node (3 - 6) as claimed in any preceding claim, said communication bus (1) and at least one of said remote nodes (11 - 25).
